(19) Europäisches Patentamt
European Patent Office
Office européen des brevets

(11) **EP 2 097 793 B1**

(12) **EUROPÄISCHE PATENTSCHRIFT**

(45) Veröffentlichungstag und Bekanntmachung des Hinweises auf die Patenterteilung:
**29.06.2011 Patentblatt 2011/26**

(21) Anmeldenummer: **07857885.3**

(22) Anmeldetag: **19.12.2007**

(51) Int Cl.:
*G05B 13/02* (2006.01)    *G06N 3/08* (2006.01)

(86) Internationale Anmeldenummer:
**PCT/EP2007/064264**

(87) Internationale Veröffentlichungsnummer:
**WO 2008/080863 (10.07.2008 Gazette 2008/28)**

(54) **VERFAHREN ZUR RECHNERGESTÜTZTEN STEUERUNG UND/ODER REGELUNG EINES TECHNISCHEN SYSTEMS**

METHOD FOR THE COMPUTER-ASSISTED CONTROL AND/OR REGULATION OF A TECHNICAL SYSTEM

PROCÉDÉ DE COMMANDE ET/OU DE RÉGULATION D'UN SYSTÈME TECHNIQUE ASSISTÉS PAR ORDINATEUR

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **02.01.2007 DE 102007001026**

(43) Veröffentlichungstag der Anmeldung:
**09.09.2009 Patentblatt 2009/37**

(73) Patentinhaber: **Siemens Aktiengesellschaft 80333 München (DE)**

(72) Erfinder:
 • **SCHÄFER, Anton Maximilian**
   **80801 München (DE)**
 • **UDLUFT, Steffen**
   **82223 Eichenau (DE)**

(56) Entgegenhaltungen:
**US-B1- 6 493 691**

 • XIAOFENG ZHUANG ET AL: "A novel approach for modeling cracking furnace severity" INTELLIGENT CONTROL AND AUTOMATION, 2004. WCICA 2004. FIFTH WORLD CONGRESS ON HANGZHOU, CHINA 15-19 JUNE 2004, PISCATAWAY, NJ, USA,IEEE, US, Bd. 1, 15. Juni 2004 (2004-06-15), Seiten 250-253, XP010729576 ISBN: 0-7803-8273-0

 • MIN HAN ET AL: "Application of Neural Networks on Multivariate Time Series Modeling and Prediction" AMERICAN CONTROL CONFERENCE, 2006 MINNEAPOLIS, MN, USA JUNE 14-16, 2006, PISCATAWAY, NJ, USA,IEEE, 14. Juni 2006 (2006-06-14), Seiten 3698-3703, XP010929375 ISBN: 1-4244-0209-3

 • ZHOU ET AL: "Fault detection and classification in chemical processes based on neural networks with feature extraction" ISA TRANSACTIONS, INSTRUMENT SOCIETY OF AMERICA. PITTSBURGH, US, Bd. 42, Nr. 4, Oktober 2003 (2003-10), Seiten 651-664, XP005835325 ISSN: 0019-0578

 • SUN-WOOK LIM ET AL: "Neural-based monitoring system for health assessment of electric transmission lines" PROCEEDINGS OF THE 2003 AMERICAN CONTROL CONFERENCE. ACC. DENVER, CO, JUNE 4 - 6, 2003, AMERICAN CONTROL CONFERENCE, NEW YORK, NY : IEEE, US, Bd. VOL. 6 OF 6, 4. Juni 2003 (2003-06-04), Seiten 2270-2275, XP010667716 ISBN: 0-7803-7896-2

 • JIN L ET AL: "DYNAMIC RECURRENT NEURAL NETWORKS FOR MODELING FLEXIBLE ROBOT DYNAMICS" PROCEEDINGS OF THE INTERNATIONAL SYMPOSIUM ON INTELLIGENT CONTROL. MONTEREY, AUG. 27 - 29, 1995, NEW YORK, IEEE, US, 27. August 1995 (1995-08-27), Seiten 105-110, XP000684147 ISBN: 0-7803-2723-3

EP 2 097 793 B1

**Beschreibung**

Die Erfindung betrifft ein Verfahren zur rechnergestützten Steuerung und/oder Regelung eines technischen Systems sowie ein entsprechendes Computerprogrammprodukt.

Heutzutage weisen technische Systeme oftmals eine hohe Komplexität auf, d.h. sie werden durch Zustände mit einer Vielzahl von Zustandsvariablen beschrieben. Die Zustandsvariablen sind hierbei insbesondere messbare Zustandsgrößen des technischen Systems, wie z.B. physikalische Größen, wie Druck, Temperatur, Leistung und dgl. Bei der Steuerung von komplexen technischen Systemen werden oftmals rechnergestützte Verfahren eingesetzt, welche das dynamische zeitliche Verhalten des technischen Systems unter Berücksichtigung vorbestimmter Kriterien optimieren. Beispiele solcher Verfahren sind Lernverfahren, wie hinlänglich aus dem Stand der Technik bekannte bestärkende Lernverfahren (Reinforcement Learning, siehe Dokument [2]). Diese Verfahren optimieren das dynamische Verhalten eines technischen Systems durch Bestimmung von geeigneten, am technischen System durchzuführenden Aktionen, wobei diese Aktionen Veränderungen von bestimmten Stellgrößen am technischen System, wie z.B. Veränderung von Ventilstellungen, Erhöhung von Drucken und dgl., umfassen. Jede Aktion wird hierbei in geeigneter Weise durch Belohnung und Bestrafung, beispielsweise unter Einbeziehung einer Kostenfunktion, bewertet, wodurch ein optimales dynamisches Verhalten des technischen Systems erzielt werden kann.

Bei den oben beschriebenen Standardverfahren zur Steuerung bzw. Optimierung des dynamischen Verhaltens von technischen Systemen besteht das Problem, dass solche Verfahren nur im begrenzten Umfang für Zustände mit einer Vielzahl von Zustandsvariablen (d.h. in einem hochdimensionalen Zustandsraum) eingesetzt werden können.

Aus dem Stand der Technik sind sog. Verfahren zu "Feature-Selection" bekannt, mit der Zustandsräume reduziert werden können. Dabei wird jedoch in der Regel nur eine Auswahl der relevanten Zustandsvariablen und nicht eine Verringerung der Dimension des Zustandsraums auf der Basis aller Variablen durchgeführt. Zudem sind diese Verfahren statisch und führen keine explizite Betrachtung und Identifizierung des dynamischen Verhaltens des technischen Systems durch.

In dem Dokument Xiaofeng Zhuang et al.: "A novel approach for modeling cracking furnace severity", Intelligent Control and Automation, 2004, WCICA 2004, Fifth World Congress on Hangzhou, China, 15-19 June 2004,Piscataway, NJ, USA, IEEE, US, Bd. 1, 15. Juni 2004 (2004-06-15), Seiten 250-253, XP010729576, ISBN: 0-7803-8273-0, und in dem Dokument Min Han et al.: "Application of Neural Networks on Multivariate Time Series Modeling and Prediction", American Control Conference, 2006, Minneapolis, MN, USA, June 14-16, 2006, Piscataway, NJ, USA, IEEE, 14. Juni 2006 (2006-06-14), Seiten 3698-3703, XP010929375, ISBN: 1-4244-0209-3, wird die Kombination einer PCA-Analyse (PCA = Principal Component Analysis) mit einem rekurrenten neuronalen Netz zur Modellierung von zeitlich aufeinander folgenden Zuständen beschrieben.

In dem Dokument Zhou et al.: "Fault detection and classification in chemical processes based on neural networks with feature extraction", ISA Transactions, Instrument Society of A-merica, Pittsburgh, US, Bd. 42, Nr. 4, Oktober 2003 (2003-10), Seiten 651-664, XP005835325, ISSN: 0019-0578, wird eine Kombination eines polynomialen Fittings mit der Modellierung von Zuständen basierend auf einem neuronalen Netz beschrieben.

Aufgabe der Erfindung ist es, ein Verfahren zur rechnergestützten Steuerung und/oder Regelung eines technischen Systems zu schaffen, bei dem an sich bekannte Lern- und Optimierungsverfahren nach einer geeigneten Reduzierung des Zustandsraums der Zustände eingesetzt werden können Diese Aufgabe wird durch die unabhängigen Patentansprüche gelöst. Weiterbildungen der Erfindung sind in den abhängigen Ansprüchen definiert.

Dem erfindungsgemäßen Verfahren wird eine Charakterisierung des technischen Systems für mehrere Zeitpunkte durch jeweilige Zustände mit einer Mehrzahl von Zustandsvariablen in einem ersten Zustandsraum zugrunde gelegt. Die Zustände im ersten Zustandsraum werden dabei mit einem rekurrenten neuronalen Netz umfassend eine Eingangsschicht, eine rekurrente versteckte Schicht und eine Ausgangsschicht mit Hilfe von bekannten Zuständen als Trainingsdaten modelliert, wobei: i) die Eingangsschicht und die Ausgangsschicht jeweils durch die Zustände in dem ersten Zustandsraum für die mehreren Zeitpunkte gebildet werden;
die rekurrente versteckte Schicht durch versteckte Zustände mit einer Mehrzahl von versteckten Zustandsvariablen in einem zweiten Zustandsraum mit einer zweiten Dimension gebildet wird, wobei die zweite Dimension niedriger als die erste Dimension ist.

Schließlich wird ein Lern- und/oder Optimierungsverfahren zur Steuerung und/oder Regelung des technischen Systems bei Ausführung von Aktionen am technischen System durchgeführt, wobei dieses Lern- bzw. Optimierungsverfahren nunmehr die versteckten Zustände im zweiten Zustandsraum verwendet.

Da die Dimension des zweiten Zustandsraums vermindert ist, können somit Lern- und/oder Optimierungsverfahren eingesetzt werden, welche in dem ursprünglichen ersten Zustandsraum aufgrund seiner hohen Dimensionen nicht einsetzbar sind. Die Erfindung schafft somit ein Verfahren, mit dem sehr flexibel an sich bekannte Lern- und/oder Optimierungsverfahren auch für hoch komplexe technische Systeme verwendet werden können. Das erfindungsgemäße Verfahren stellt hierbei eine effiziente Möglichkeit der Dimensionsreduzierung des Zustandsraums dar, wobei die hohe Qualität der Identifikation des technischen Systems mit Hilfe rekurrenter neuronaler Netze dazu genutzt wird, um die Entwicklung des Systems mit minimaler Dimension des Zustandsraums abzubilden bzw. zu modellieren. Im Gegensatz zu bereits existierenden Verfahren mit vergleichbarer Zielsetzung wird eine explizite Identifizierung und Modellierung der Dynamik durchgeführt. Insbesondere ermöglicht die Verwendung rekurrenter neuronaler Netze auch eine Modellierung nicht-linearer Dynamiken. Das Verfahren wurde von den Erfindern bereits erfolgreich in einem Verfahren zur Steuerung einer Gasturbine eingesetzt.

Das erfindungsgemäße Verfahren weist insbesondere den Vorteil auf, dass auch technische Systeme mit nicht-linearer Dynamik gesteuert bzw. geregelt werden können. Ferner kann in dem erfindungsgemäßen Verfahren ein rekurrentes neuronales Netz mit einer nicht-linearen Aktivierungsfunktion eingesetzt werden.

Wie bereits oben erwähnt, werden erfindungsgemäß bekannte Lern- und/oder Optimierungsverfahren in einem über ein rekurrentes neuronales Netz ermittelten Zustandsraum verminderter Dimension eingesetzt. Diese Lern- und/ Optimierungsverfahren können beispielsweise bestärkende Lernverfahren sein, welche hinlänglich aus dem Stand der Technik bekannt sind und bereits im Vorangegangenen erwähnt wurden.

Um die Dimension des Zustandsraums weitestmöglich bei gleichzeitig ausreichender Vorhersagequalität zu minimieren, wird in einer Ausführungsform des erfindungsgemäßen Verfahrens die zweite Dimension des zweiten Zustandsraums schrittweise so lange herabgesetzt, wie die Abweichung zwischen mit dem rekurrenten neuronalen Netz bestimmten Zuständen und den bekannten Zuständen der Trainingsdaten kleiner als ein vorbestimmter Schwellenwert ist. Auf diese Weise wird ein minimaler Zustandsraum geschaffen, der eine dateneffiziente Anwendung von bekannten Lernverfahren ermöglicht.

Das erfindungsgemäße rekurrente neuronale Netz ist vorzugsweise derart ausgestaltet, dass jeder Zustand des technischen Systems zu einem jeweiligen Zeitpunkt in der Eingangsschicht über einen versteckten Zustand der versteckten Schicht zu dem jeweiligen Zeitpunkt mit einem Zustand des technischen Systems in der Ausgangsschicht zu einem dem jeweiligen Zeitpunkt nachfolgenden Zeitpunkt gekoppelt ist. Das rekurrente neuronale Netz stellt hierbei vorzugsweise ein Netz mit dynamisch konsistenter zeitlicher Entfaltung unter Berücksichtigung zukünftiger Zustände dar (im Englischen bezeichnet als "Network with Dynamically Consistent Overshooting"). Bei solchen Netzen werden die eigenen Vorhersagen des Netzwerks als Ersatz für unbekannte zukünftige Eingaben im Netzwerk verwendet.

Zur Modellierung der Zustände des ersten Zustandsraums mit dem rekurrenten neuronalen Netz kann insbesondere ein Backpropagation-Verfahren eingesetzt werden, insbesondere das in der Druckschrift [1] beschriebene Verfahren.

In einer bevorzugten Ausführungsform wird das zur Minimierung des Zustandsraums verwendete rekurrente neuronale Netz durch folgende Gleichungen repräsentiert:

$$s_\tau = \tanh(As_{\tau-1} + Bx_\tau + \theta)$$

$$x_{\tau+1} = Cs_\tau$$

$$\sum_t \sum_\tau (x_\tau - x_\tau^d)^2 \to \min_{A,B,C,\theta}$$

wobei der Wertebereich von $\tau$ eine vorbestimmte Anzahl m von Zeitschritten vor dem Zeitpunkt t und eine vorbestimmte Anzahl n von Zeitschritten nach dem Zeitpunkt t umfasst;

wobei $t \in \{m,..., T\text{-}n\}$, wobei T die Anzahl an Zeitpunkten, für welche Trainingsdaten vorliegen;

wobei $\chi_\tau$ den durch das rekurrente neuronale Netz bestimmten Zustand des ersten Zustandsraums zum Zeitpunkt $\tau$ repräsentiert;

wobei $x_\tau^d$ den bekannten Zustand zum Zeitpunkt $\tau$ gemäß den Trainingsdaten repräsentiert;

wobei $S\tau$ den versteckten Zustand zum Zeitpunkt $\tau$ der versteckten Schicht des rekurrenten neuronalen Netzes repräsentiert;

wobei A, B, C zu bestimmende Matrizen und $\theta$ ein zu bestimmender Bias sind.

Wie bereits oben erwähnt, kann die Erfindung für beliebige technische Systeme eingesetzt werden, welche durch entsprechende Zustände beschrieben werden. Ein Anwendungsfall ist beispielsweise eine Turbine, insbesondere eine Gasturbine.

Neben dem oben beschriebenen Verfahren betrifft die Erfindung ferner ein Computerprogrammprodukt mit einem auf einem maschinenlesbaren Träger gespeicherten Programmcode zur Durchführung des erfindungsgemäßen Verfahrens, wenn das Programm auf einem Rechner abläuft.

Ausführungsbeispiele der Erfindung werden nachfolgend anhand der beigefügten Figur detailliert beschrieben.

Es zeigt:

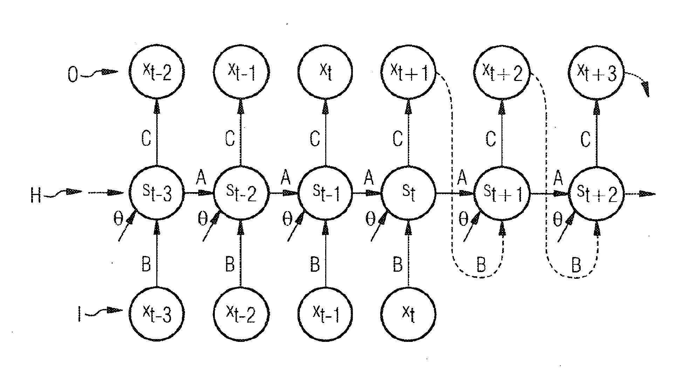

Fig. 1    eine schematische Darstellung eines rekurrenten neuronalen Netzes, welches in einer Ausführungsform der Erfindung zur Reduzierung der Dimension des ersten Zustandsraums verwendet wird.

In der nachfolgend beschriebenen Ausführungsform der Erfindung wird eine Verminderung der Dimension eines ersten Zustandsraums mit Hilfe eines neuronalen Netzes erreicht. Der erste Zustandsraum ist hierbei charakterisiert durch eine Dimension, welche durch die Anzahl der Zustandsvariablen der Zustände $x_t$ des technischen Systems zu jeweiligen Zeitpunkten t charakterisiert ist. Der Zustand $x_t$ ist somit ein Zustandsvektor mit Einträgen von Zustandsvariablen eines technischen Systems, wobei Werte der Zustandsvariablen gemessen werden können. Ist das technische System beispielsweise eine Gasturbine, umfassen die Zustandsvariablen insbesondere Größen wie den Gasdruck, die Gastemperatur, Brennkammerbeschleunigungen und dgl. Die Dimension des ersten Zustandsraums ist dabei meistens hochdimensional und oftmals für bekannte Lernverfahren zu groß. Deshalb ist es Ziel der Erfindung, die Dimension des Zustandsraums zu minimieren, um bekannte Lernverfahren verwenden zu können. Dies wird in der hier beschriebenen Ausführungsform mit dem rekurrenten neuronalen Netz gemäß Fig. 1 erreicht.

Das Netz der Fig. 1 umfasst eine Eingangsschicht I, welche zu einem betrachteten Zeitpunkt t aus dem entsprechenden hochdimensionalen Zustand $x_t$ und vergangenen Zuständen $x_{t-1}$, $x_{t-2}$, $x_{t-3}$ usw. gebildet ist. Die Zustände der Eingangsschicht sind über eine Matrix B mit versteckten Zuständen einer versteckten Schicht H sowie eine Bias $\theta$ gekoppelt, wobei einem Zustand $x_t$ zu einem Zeitpunkt t ein entsprechender versteckter Zustand $s_t$ zum gleichen Zeitpunkt in der versteckten Schicht H zugeordnet ist. Um eine Reduzierung des ersten Zustands-raums zu erreichen, ist die Dimension des Zustandsraums der versteckten Zustände $s_t$, der gemäß den Ansprüchen als zweiter Zustandsraum bezeichnet wird, geringer als die Dimension des ersten Zustandsraums. Die versteckte Schicht H ist hierbei eine rekurrente Schicht, bei der ein versteckter Zustand $s_t$ zu einem Zeitpunkt t über eine Matrix A und dem Bias $\theta$ mit dem Zustand $s_{t+1}$ zum nachfolgenden Zeitpunkt gekoppelt ist. Die einzelnen versteckten Zustände $s_t$ der Schicht H sind wiederum mit einer Ausgangsschicht O verbunden, welche - analog zur Eingangsschicht I - durch Zustände $x_t$ des technischen Systems repräsentiert wird. Hierbei ist ein versteckter Zustand $s_t$ zu einem jeweiligen Zeitpunkt t mit dem Zustand $x_{t+1}$ zum nächsten Zeitpunkt t+1 über eine Matrix C gekoppelt.

Das in Fig. 1 gezeigte rekurrente neuronale Netz wird mit Trainingsdaten umfassend bekannte Zustände des technischen Systems trainiert, so dass mit dem Netz das dynamische zeitliche Verhalten des entsprechenden technischen Systems modelliert wird. Das rekurrente Netz gemäß Fig. 1 stellt dabei ein Netz mit dynamischer konsistenter zeitlicher Entfaltung unter Berücksichtigung zukünftiger Zustände dar, was im Englischen als "Network with Dynamically Consistent Overshooting" bezeichnet wird. Dies bedeutet, dass in dem Netz zu einem Zeitpunkt t nicht nur Zustände $x_t$, $x_{t-1}$,..., usw. in der Vergangen-heit, sondern auch zukünftige Zustände $x_{t+1}$, $x_{t+1}$,..., usw. berücksichtigt werden, wobei die eigenen Vorhersagen des Netzes in der Ausgangsschicht, d.h. in Fig. 1 die Zustände $x_{t+1}$, $x_{t+2}$ und $x_{t+3}$ wiederum als Eingaben in dem Netz verwendet werden. Dies ist in Fig. 1 durch gestrichelte Linien angedeutet, welche die Zustände der Ausgangsschicht O mit entsprechenden Zuständen der versteckten Schicht H koppeln. In dem rekurrenten neuronalen Netz gemäß Fig. 1 werden somit die Zustände $x_\tau$ des Systems selbst vorhergesagt. Auf diese Weise kann die Dynamik des zugrunde liegenden technischen Systems modelliert werden. Mathematisch wird das Netz der Fig. 1 durch die folgenden Gleichungen repräsentiert:

$$s_\tau = \tanh(As_{\tau-1} + Bx_\tau + \theta)$$

$$x_{\tau+1} = Cs_\tau$$

$$\sum_t \sum_\tau (x_\tau - x_\tau^d)^2 \to \min_{A,B,C,\theta}$$

Die Gleichungen betreffen das rekurrente neuronale Netz zu einem Zeitpunkt t, wobei zu einem Zeitpunkt t ein Wertebereich von Zeitpunkten $\tau$ berücksichtigt wird, wobei der Wertebereich von $\tau$ eine vorbestimmte Anzahl m von Zeitschritten vor dem Zeitpunkt t und eine vorbestimmte Anzahl n von Zeitpunkten nach dem Zeitpunkt (dem sog. Overshooting Part) umfasst.

Es gilt hierbei

$$t \in \{m,...,T - n\}$$

wobei T die Anzahl an Zeitpunkten repräsentiert, für welche Trainingsdaten, d.h. bekannte Zustände des technischen Systems, vorliegen.

Gemäß den obigen Gleichungen werden als Parameter des neuronalen Netzes die Matrizen A, B, C sowie der Bias $\theta$ bestimmt, wobei diese Parameter derart gewählt werden, dass der quadratische Fehler zwischen durch das Netz bestimmten Zuständen $x_\tau$ und den entsprechenden bekannten Zuständen $x_\tau^d$ gemäß den Trainingsdaten minimal ist.

Nach der Modellierung des technischen Systems mit dem rekurrenten neuronalen Netz werden die hieraus erhaltenen Zustände $s_t$ der versteckten Schicht dazu verwendet, um auf diese Zustände ein entsprechendes Lern- und/ oder Optimierungsverfahren zur Steuerung und/oder Regelung des technischen Systems bei Ausführung von Aktionen am technischen System anzuwenden. Da die Dimension der Zustände in der versteckten Schicht H geringer als die Dimension des ersten Zustandsraums ist, können hierbei auch Lernverfahren eingesetzt werden, welche im ursprünglichen ersten Zustandsraum aufgrund der zu großen Dimension nicht verwendbar sind. Das Verfahren der Erfindung ermöglicht somit eine effektive Reduzierung des Zustandsraums, um eine Vielzahl von bekannten Lern- oder Optimierungsverfahren zur Modellierung des dynamischen Verhaltens des technischen Systems einsetzen zu können. In einer bevorzugten Variante wird hierbei bei der Modellierung der Zustände des ersten Zustandsraums mit dem rekurrenten neuronalen Netz sukzessive die Dimension der versteckten Zustände solange vermindert, wie eine Abweichung der mit dem rekurrenten Netz bestimmten Zustände in der Ausgangsschicht zu den bekannten Zuständen gemäß den Trainingsdaten geringer als ein vorbestimmter Schwellenwert ist. Auf diese Weise kann die bestmögliche Verminderung der Dimension des Zustandsraums erreicht werden.

Als Lern- bzw. Optimierungsverfahren kann beispielsweise ein beliebiges aus dem Stand der Technik bekanntes Verfahren zum bestärkenden Lernen (sog. Reinforcement Learning) eingesetzt werden. Diese Lernverfahren ermöglichen das Lernen von in dem technischen System durchzuführenden Aktionen unter Berücksichtigung von Belohnung bzw. Bestrafung, um hierdurch das dynamische Verhalten des technischen Systems zu optimieren.

Literaturverzeichnis:

[1] D.E. Rumelhart, G.E. Hinton, and R.J. Williams, "Learning internal representations by error propagation", in Parallel Distributed Processing: Explorations in The Microstructure of Cognition, D.E. Rumelhart and J.L.M. et al., Eds. Cambridge: MIT Press, 1986, vol. 1, pp. 318-362

[2] Leslie Pack Kaelbling; Michael L. Littman; Andrew W. Moore, Reinforcement Learning: A Survey, Journal of Artificial Intelligence Research 4 (1996) pp. 237-285

**Patentansprüche**

1. Verfahren zur rechnergestützten Steuerung und/oder Regelung eines technischen Systems, bei dem:

a) das technische Systems für mehrere Zeitpunkte (t) jeweils durch einen Zustand ($x_t$) mit einer Mehrzahl von Zustandsvariablen in einem ersten Zustandsraum mit einer ersten Dimension charakterisiert wird;
b) die Zustände ($x_t$) des ersten Zustandsraums mit einem rekurrenten neuronalen Netz umfassend eine Eingangsschicht (I), eine rekurrente versteckte Schicht (H) und eine Ausgangsschicht (O) mit Hilfe von bekannten Zuständen als Trainingsdaten modelliert werden, wobei:

  i) die Eingangsschicht (I) und die Ausgangsschicht (O) jeweils durch die Zustände ($x_t$) in dem ersten Zustandsraum für die mehreren Zeitpunkte (t) gebildet werden;
  ii) die rekurrente versteckte Schicht (H) durch versteckte Zustände ($s_t$) mit einer Mehrzahl von versteckten Zustandsvariablen in einem zweiten Zustandsraum mit einer zweiten Dimension gebildet wird, wobei die zweite Dimension niedriger als die erste Dimension ist;

  c) auf den versteckten Zuständen ($s_t$) in dem zweiten Zustandsraum ein Lern- und/oder Optimierungsverfahren zur Steuerung und/oder Regelung des technischen Systems durch Ausführen von Aktionen am technischen System durchgeführt wird.

2. Verfahren nach Anspruch 1, bei dem das technische System eine nicht-lineare Dynamik aufweist.

3. Verfahren nach Anspruch 1 oder 2, bei dem in Schritt b) das rekurrente neuronale Netz eine nicht-lineare Aktivierungsfunktion verwendet.

4. Verfahren nach einem der vorhergehenden Ansprüche, bei dem das Lern- und/oder Optimierungsverfahren ein bestärkendes Lernverfahren ist.

5. Verfahren nach einem der vorhergehenden Ansprüche, bei dem in Schritt b) die zweite Dimension des zweiten Zustandsraums schrittweise solange vermindert wird, wie die Abweichung zwischen den mit dem rekurrenten neuronalen Netz bestimmten Zuständen ($x_t$) und den bekannten Zuständen ($x_t$) der Trainingsdaten kleiner als ein vorbestimmter Schwellenwert ist.

6. Verfahren nach einem der vorhergehende Ansprüche, bei dem ein Zustand ($x_t$) des technischen Systems zu einem jeweiligen Zeitpunkt (t) in der Eingangsschicht (I) über einen verstecken Zustand ($s_t$) der verstecken Schicht (H) zu dem jeweiligen Zeitpunkt (t) mit einem Zustand ($x_t$) des technischen Systems in der Ausgangsschicht (O) zu einem dem jeweiligen Zeitpunkt (t) nachfolgenden Zeitpunkt (t+1) gekoppelt ist.

7. Verfahren nach einem der vorhergehenden Ansprüche, bei dem das rekurrente neuronale Netz ein Netz mit dynamisch konsistenter zeitlicher Entfaltung unter Berücksichtigung zukünftiger Zustände ($x_t$) ist.

8. Verfahren nach einem der vorhergehenden Ansprüche bei dem zur Modellierung der Zustände ($x_t$) des ersten Zustandsraums mit dem rekurrenten neuronalen Netz ein Backpropagation-Verfahren verwendet wird.

9. Verfahren nach einem der vorhergehenden Ansprüche, bei dem das rekurrente neuronale Netz durch folgende Gleichungen repräsentiert wird:

$$s_\tau = \tanh(As_{\tau-1} + Bx_\tau + \theta)$$

$$x_{\tau+1} = Cs_\tau$$

$$\sum_t \sum_\tau (x_\tau - x_\tau^d)^2 \to \min_{A,B,C,\theta}$$

wobei der Wertebereich von $\tau$ eine vorbestimmte Anzahl m von Zeitschritten vor dem Zeitpunkt t und eine vorbestimmte Anzahl n von Zeitschritten nach dem Zeitpunkt t umfasst;
wobei $t \in \{m,..., T - n\}$, wobei T die Anzahl an Zeitpunkten, für welche Trainingsdaten vorliegen;
wobei $\chi_\tau$ den durch das rekurrente neuronale Netz bestimmten Zustand des ersten Zustandsraums zum Zeitpunkt

$\tau$ repräsentiert;

wobei $x_{\tau}^{d}$ den bekannten Zustand zum Zeitpunkt $\tau$ gemäß den Trainingsdaten repräsentiert;

wobei $S_{\tau}$ den versteckten Zustand zum Zeitpunkt $\tau$ der versteckten Schicht des rekurrenten neuronalen Netzes repräsentiert;

wobei A, B, C zu bestimmende Matrizen und $\theta$ ein zu bestimmender Bias sind.

10. Verfahren nach einem der vorhergehenden Ansprüche, bei dem das technische System eine Turbine, insbesondere eine Gasturbine, ist.

11. Computerprogrammprodukt mit einem auf einem maschinenlesbaren Träger gespeicherten Programmcode zur Durchführung des Verfahrens nach einem der vorhergehenden Ansprüche, wenn das Programm auf einem Rechner abläuft.

**Claims**

1. Method for computer-aided control and/or regulation of a technical system in which:

   a) the technical system is **characterized** for a number of points in time (t) in each case by a state ($x_t$), with a plurality of state variables in a first state space with a first dimension;
   b) the states ($x_t$) of the first state space are modeled as training data with a recurrent neural network comprising an input layer (I), a recurrent hidden layer (H) and an output layer (O) with the aid of known states, with:

   i) the input layer(I) and the output layer (O) being formed in each case by the states ($x_t$) in the first state space for the number of times (t);
   ii) the recurrent hidden layer (H) being formed by hidden states ($s_t$) with a plurality of hidden state variables in a second state space with a second dimension, with the second dimension being lower than the first dimension;

   c) a learning and/or optimisation method for control and/or regulation of the technical system being carried out on the hidden states ($s_t$) in the second state space by executing actions on the technical system.

2. Method as claimed in claim 1 in which the technical system exhibits a non-linear dynamic.

3. Method in accordance with claim 1 or 2 in which, in step b), the recurrent neural network uses a non-linear activation function.

4. Method in accordance with one of the previous claims in which the learning and/or optimization method is a reinforcement learning method.

5. Method in accordance with one of the previous claims in which, in step b) the second dimension of the second state space is reduced in steps while the deviation between the states ($x_t$) determined with the recurrent neural network and the known states ($x_t$) of the training data is smaller than a predetermined threshold value.

6. Method in accordance with one of the previous claims in which a state ($x_\tau$) of the technical system at a relevant time (t) in the input layer (I) is coupled via a hidden state ($s_t$) of the hidden layer (H) at the relevant time (t) with a state ($x_t$) of the technical system in the output layer (O) at a time (t+1) following the relevant time (t).

7. Method in accordance with one of the previous claims in which the recurrent neural network is a network with dynamically consistent temporal unfolding taking into account future states ($x_t$) .

8. Method in accordance with one of the previous claims, in which, for modelling the states ($x_t$) of the first state space with the recurrent neural network, a back propagation method is used.

9. Method in accordance with one of the previous claims, in which the recurrent neural network is represented by the following equations:

$$s_\tau = \tanh(As_{\tau-1} + Bx_\tau + \theta)$$

$$x_{\tau-1} = CS_\tau$$

$$\sum_t \sum_\tau (x_\tau - x_\tau^d)^2 \to \min_{A,B,C,\theta}$$

with the range of values of T comprising a predetermined number m of time steps before the time t and a predetermined number n of time steps after the time t;

with $t \in \{m,..., T\text{-}n\}$, with T being the number of times for which training data is present;

with $\chi_\tau$ representing the state of the first state space at time $\tau$ determined by the recurrent neural network;

with $X_\tau^d$ representing the known state at timer $\tau$ in accordance with the training data;

with $S_r$ representing the hidden state at time $\tau$ of the hidden layer of the recurrent neural network;

with A, B, C being matrices to be determined and $\theta$ being a bias to be determined.

10. Method in accordance with one of the previous claims in which the technical system is a turbine, especially a gas turbine.

11. Computer program product with a program code stored on a machine-readable medium for carrying out the method in accordance with one of the previous claims when the program is executed on a computer.


**Revendications**

1. Procédé de commande et/ou de réglage d'un système technique assistés par ordinateur, dans lequel :

   a) le système technique est **caractérisé**, pour plusieurs instants (t), respectivement par un état ($x_t$) avec une pluralité de variables d'état dans un premier espace d'états avec une première dimension ;
   b) les états ($x_t$) du premier espace d'états sont modélisés avec un réseau neuronal récurrent comprenant une couche d'entrée (I), une couche cachée récurrente (H) et une couche de sortie (O) à l'aide d'états connus sous la forme de données d'apprentissage ;

      i) la couche d'entrée (I) et la couche de sortie (O) étant respectivement formées par les états ($x_t$) dans le premier espace d'états pour les plusieurs instants (t) ;
      ii) la couche cachée récurrente (H) étant formée par des états cachés ($s_t$) avec une pluralité de variables d'état cachées dans un deuxième espace d'états avec une deuxième dimension, la deuxième dimension étant inférieure à la première dimension ;

   c) est exécuté, sur les états cachés ($s_t$) dans le deuxième espace d'états, un procédé d'apprentissage et/ou d'optimisation en vue de la commande et/ou du réglage du système technique par exécution d'actions au niveau du système technique.

2. Procédé selon la revendication 1, dans lequel le système technique présente une dynamique non linéaire.

3. Procédé selon la revendication 1 ou 2, dans lequel le réseau neuronal récurrent, à l'étape b), utilise une fonction d'activation non linéaire.

4. Procédé selon l'une des revendications précédentes, dans lequel le procédé d'apprentissage et/ou d'optimisation est un procédé d'apprentissage par renforcement.

5.  Procédé selon l'une des revendications précédentes, dans lequel la deuxième dimension du deuxième espace d'états, à l'étape b), est réduite progressivement aussi longtemps que l'écart entre les états ($x_t$) déterminés avec le réseau neuronal récurrent et les états connus ($x_t$) des données d'apprentissage est inférieur à une valeur seuil prédéterminée.

6.  Procédé selon l'une des revendications précédentes, dans lequel un état ($x_t$) du système technique à un instant (t) respectif dans la couche d'entrée (I) est couplé, via un état caché ($s_t$) de la couche cachée (H), à l'instant respectif (t), avec un état ($x_t$) du système technique dans la couche de sortie (O) à un instant (t+1) suivant l'instant respectif (t).

7.  Procédé selon l'une des revendications précédentes, dans lequel le réseau neuronal récurrent est un réseau à déconvolution temporelle dynamiquement consistante compte tenu d'états futurs ($x_t$) .

8.  Procédé selon l'une des revendications précédentes, dans lequel un procédé de rétropropagation est utilisé pour modéliser les états ($x_t$) du premier espace d'états avec le réseau neuronal récurrent.

9.  Procédé selon l'une des revendications précédentes, dans lequel le réseau neuronal récurrent est représenté par les équation suivantes :

$$s_t = \tanh(As_{t-1} + Bx_\tau + \theta)$$

$$x_{\tau+1} = Cs_\tau$$

$$\sum_t \sum_\tau (x_\tau - x_\tau^d)^2 \to \min_{A,B,C,\theta}$$

la plage de valeurs de $\tau$ incluant un nombre prédéterminé m d'intervalles de temps précédant l'instant t et un nombre prédéterminé n d'intervalles de temps suivant l'instant t ;
avec $t \in \{m,..., T\text{-}n\}$, T étant le nombre d'instants pour lesquels on a des données d'apprentissage ;
$\chi_\tau$ représentant l'état du premier espace d'états déterminé par le réseau neuronal récurrent à l'instant $\tau$ ;

$$x_\tau^d$$ représentant l'état connu à l'instant $\tau$ conformément aux données d'apprentissage ;

$S_\tau$ représentant l'état caché à l'instant $\tau$ de la couche cachée du réseau neuronal récurrent ;
A, B, C étant des matrices à déterminer et $\theta$ étant un décalage à déterminer.

10. Procédé selon l'une des revendications précédentes, dans lequel le système technique est une turbine, et plus particulièrement une turbine à gaz.

11. Produit de programme informatique avec un code de programme stocké sur un support lisible par machine pour réaliser le procédé selon l'une des revendications précédentes lorsque le programme tourne sur un ordinateur.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **Xiaofeng Zhuang et al.** A novel approach for modeling cracking furnace severity. *Intelligent Control and Automation, 2004, WCICA 2004, Fifth World Congress on Hangzhou, China, 15-19 June 2004,Piscataway, NJ, USA, IEEE,* 15. Juni 2004, vol. 1, ISBN 0-7803-8273-0, 250-253
- **Min Han et al.** Application of Neural Networks on Multivariate Time Series Modeling and Prediction. *American Control Conference, 2006, Minneapolis, MN, USA, June 14-16, 2006, Piscataway, NJ, USA, IEEE,* 14. Juni 2006, ISBN 1-4244-0209-3, 3698-3703

- **Zhou et al.** Fault detection and classification in chemical processes based on neural networks with feature extraction. *ISA Transactions, Instrument Society of A-merica,* Oktober 2003, vol. 42 (4), ISSN 0019-0578, 651-664
- Learning internal representations by error propagation. **D.E. Rumelhart ; G.E. Hinton ; R.J. Williams et al.** Parallel Distributed Processing: Explorations in The Microstructure of Cognition. MIT Press, 1986, vol. 1, 318-362
- **Leslie Pack Kaelbling ; Michael L. Littman ; Andrew W. Moore.** Reinforcement Learning: A Survey. *Journal of Artificial Intelligence Research,* 1996, vol. 4, 237-285